# EUROPÄISCHE PATENTSCHRIFT

(11) **EP 3 124 325 B1**
(45) Veröffentlichungstag und Bekanntmachung des Hinweises auf die Patenterteilung: **25.09.2019**
(21) Anmeldenummer: 16180115.4
(22) Anmeldetag: 19.07.2016
(51) Int. Cl.: B60P 7/08

(54) **SYSTEM ZUR HALTERUNG EINES TRANSPORTGEGENSTANDES**
SYSTEM FOR HOLDING A TRANSPORT OBJECT
SYSTEME DE MAINTIEN D'UN OBJET DE TRANSPORT

(30) Priorität: 27.07.2015 DE 102015112191
(43) Veröffentlichungstag der Anmeldung: 01.02.2017
(73) Patentinhaber: allsafe GmbH & Co. KG, 78234 Engen (DE)
(72) Erfinder: PIETREK, Daniel, 78234 Engen (DE)
(74) Vertreter: Patentanwälte und Rechtsanwalt Weiß, Arat & Partner mbB

(56) Entgegenhaltungen:
- EP-A1- 0 738 626
- EP-A1- 1 291 239
- US-A- 3 212 457
- US-A- 3 831 976

## Beschreibung

Die vorliegende Erfindung betrifft ein System zur Halterung eines Transportgegenstandes nach dem Oberbegriff des Anspruchs 1, ein Verfahren zum Anbringen des System nach Anspruch 13 sowie eine Verwendung des Systems nach Anspruch 14.

### STAND DER TECHNIK

Für den Transport von Gütern und Werkzeugen werden insbesondere im Handwerksbereich häufig Transporter eingesetzt. In diesen Transportern gestaltet sich dabei häufig die Unterbringung und Sicherung der Ladung als schwierig, wodurch diese immer wieder vernachlässigt wird, was wiederum zu gefährlichen Situationen für die Insassen oder andere Verkehrsteilnehmer führen kann. Regale oder ähnliches, die im Stand der Technik zum Transport von Waren eingesetzt werden, sind oft nicht platzsparend in den Transportfahrzeugen unterzubringen.

Um Transportgüter, bspw. Langgüter wie etwa Rohre, besser in einem Transportfahrzeug unterbringen zu können ist aus dem Stand der Technik auch ein Innendachtträger bekannt. Ein solches System ist bspw. in der EP 2 098 410 B1 dargestellt. Diese zeigt einen System für Kraftfahrzeuge, der wenigstens eine Stange umfasst, die sich in der Nähe des Dachs des Kraftfahrzeugs erstreckt, wobei die Stange einen Querträger und zwei Füße mit Befestigungsmitteln umfasst, die mit weiteren Befestigungsmitteln zusammenwirken. Die Befestigungselemente sind dabei über ein Verbindungselement mit dem Fahrgestell des Fahrzeugs verbunden. Durch die Befestigungsmittel kann die Stange in zwei verschiedenen Positionen, einer eingeklappten Position in Dachnähe und einer ausgeklappten Position zum Transport, gehalten werden. Nachteilig an dieser Anordnung ist, dass einerseits keine Zwischenpositionen realisierbar ist und, dass durch dieses System keine Ladungssicherung erfolgt.

### AUFGABE

Aufgabe der Erfindung ist es ein System zur Halterung eines Transportgegenstandes für Transportfahrzeuge zur Verfügung zu stellen, das zur Unterbringung und Lagerung von Transportgegenständen dient und einfach in ein solches Transportfahrzeug im Dachbereich integriert werden kann. Weiterhin ist es Aufgabe der Erfindung ein möglichst platzsparendes und flexibles System zur Verfügung zu stellen, das zumindest auch teilweise ladungssichernde Funktionen übernehmen kann und/oder zur Aufnahme von Ladungssicherungselementen geeignet ist. Zudem soll das System möglichst einfach in eine andere Gebrauchslage verstellt werden können und variabel einsetz- und erweiterbar sein.

### LÖSUNG DER AUFGABE

Zur Lösung der Aufgabe führen die Merkmale nach den Ansprüchen 1, 13 und 14. Vorteilhafte Ausgestaltungen finden sich in den Unteransprüchen.

Ein erfindungsgemässes System ist zur Anbringung an einem Querholm eines Transportfahrzeugs geeignet. Als Transportfahrzeuge kommen unterschiedliche Transporter in Betracht. Diese Transporter zeichnen sich in erster Linie dadurch aus, dass sie einen Bodenbereich und einen Deckenbereich aufweisen. Der Deckenbereich weist in der Regel Deckenstreben auf. Diese Deckenstreben werden im Rahmen der Anmeldung als Querholme bezeichnet. Das erfindungsgemässe System ist derart gestaltet, dass an dem Querholm eine Träger-Airlineschiene reversibel befestigbar ist.

An den Querholm sind eine Querholm-Airlineschiene und/oder ein Befestigungsprofil reversibel anbringbar, wobei die Querholm-Airlineschiene und/oder das Befestigungsprofil mit einer Träger-Airlineschiene verbindbar ist/sind, wobei die Träger-Airlineschiene zwei in der Träger-Airlineschiene verschiebbare und festlegbare Gurtankergleiter umfasst, wobei zwischen den zwei Gurtankergleitern ein längenveränderbarer Gurt angeordnet ist, wobei einer der beiden Gurtankergleiter oder beide Gurtankergleiter ein Klemmschloss umfasst/umfassen.

Die Träger-Airlineschiene ist dabei über zwei Querholm-Airlineschienen und/oder zwei Befestigungsprofile an dem Querholm festlegbar, wobei diese Festlegung reversibel sein soll. Die Querholm-Airlineschienen bzw. die Befestigungsprofile können dabei direkt an dem Querholm befestigt werden. Das kann in der Weise erfolgen, dass die Querholm-Airlineschiene bzw. das Befestigungsprofil über je eine Rändelschraube mit der Träger-Airlineschiene verbunden werden. Dazu weist die eine Rändelschraube für die Querholm-Airlineschiene einen nicht näher gezeigten Sperrfuss auf, welcher in die Querholm-Airlineschiene eingelegt ist und durch die Träger-Airlineschiene hindurchgreift und mittels Handbetätigung wird erreicht, dass die Querholm-Airlineschiene und die Träger-Airlineschiene miteinander verbunden werden. Die Querholm-Airlineschiene wird dabei durch handelsübliche Befestigungsmethoden wie Verschrauben mit dem Querholm verbunden.

Die andere Rändelschraube für das Befestigungsprofil wiederum greift durch eine Öffnung des Befestigungsprofils und die Träger-Airlineschiene hindurch, wobei ein Schraubenkopf nicht durch die Öffnung gleiten kann. Das andere Ende der Schraube wird durch eine Handbetätigung herangeschraubt, so dass der Schraubenkopf das Befestigungsprofil an die Träger-Airlineschiene heranzieht.

Das Befestigungsprofil ist bevorzugt ein U-Profil. Es weist Befestigungslöcher auf, welche zur Festlegung an dem Querholm dienen.

Ein erfindungsgemässes System ist derart gestaltet, dass in der Träger-Airlineschiene ein Gurtankergleiter angeordnet ist, wobei der Gurtankergleiter in der Träger-Airlineschiene verschiebbar und festlegbar ist und einen längenveränderbaren Gurt umfasst. Bei dem Gurt handelt es sich bevorzugt um einen handelsüblichen Zurrgurt, der erfindungsgemässe Zurrgurt aber auch eine Längenveränderung in der Weise ermöglichen, dass er beispielsweise durch ein Klemmschloss angezogen werden kann, um beispielsweise bei einer Schlaufenform den Durchmesser zu reduzieren. Letztendlich ist auch jedes einsetzbare Seilelement als Gurt anzusehen, solange es entweder per se längenveränderbar ist oder beispielsweise mit entsprechenden Verknotungen zu einer Längenveränderung geführt werden kann. Längenveränderbar bedeutet im Rahmen der Erfindung, dass der zu einer Schlaufe gelegte Gurt entweder einen Durchmesservergrößerung und/oder eine Durchmesserverkleinerung erfährt.

Ausserdem umfasst der Gurtankergleiter zur Festlegung in einer Träger-Airlineschiene einen Airline-Fuss, wobei die besondere erfinderische Leistung in der Integration eines Klemmschlosses in den Gurtankergleiter liegt. Vorteilhaft hierbei ist der Umstand, dass es keines zusätzlichen Gurtstraffers bedarf, welcher dann direkt an dem Gurt angebracht ist und beim Einsatz einen Nutzer verletzen könnte. Das integrierte Klemmschloss beinhaltet keine Gefahr und erleichtert die Handhabung des Gurtankergleiters.

Das Klemmschloss umfasst einen federgelagerten Betätigungsgriff und ein Gegenelement. Dabei ist der Gurt zwischen dem Betätigungsgriff und dem Gegenelement hindurch geführt. Der Betätigungsgriff weist eine abgerundete Zackenkante auf, welche zu dem Gegenelement hin auf eine Führungsfläche des Gegenelementes gerichtet ist, wobei durch Niederdrücken des Betätigungsgriffs der zwischen dem Betätigungsgriff und dem Gegenelement verlaufende Gurt gelöst wird. Die abgerundete Zackenkante des Betätigungsgriffs erleichtert die Verklemmung des Gurts, indem die abgerundete Zackenkante den Gurt gegen die Führungsfläche des Gegenelementes drückt und an den Zackenkanten-Spitzen entsprechend eine grössere Anpresskraft entsteht.

Eine weitere abgerundete Zackenkante ist an dem Gegenelement vorhanden, welche zu einem Innenboden des Gurtankergleiters ausgerichtet ist. Diese abgerundete Zackenkante des Gegenelementes übernimmt beim Anziehen des Gurts, nachdem der Betätigungsgriff den Gurt frei gegeben hat, eine Führungsrolle und erleichtert dem Nutzer das Anziehen des Gurtes.

Der längenveränderbare Gurt ist zwischen dem Gurtankergleiter und entweder einem weiteren Gurtankergleiter oder einem festen Gurthalter angeordnet. Der feste Gurthalter wäre dann derart ausgestaltet, dass er beispielsweise fest an der Decke des Fahrzeugs oder nicht verschiebbar an der Träger-Airlineschiene angeordnet wäre.

Der verschiebbare und festlegbare Gurtankergleiter umfasst dabei den Airline-Fuss, welcher in die Träger-Airlineschiene eingreifen und in der Träger-Airlineschiene verschoben werden kann. Der Airline-Fuss ist mittels eines Zugelements gegen die Kraft einer Feder bewegt werden.

Der Gurt kann zwischen den beiden Gurtankergleitern oder der festen Gurtaufnahme als Schlaufe angeordnet werden. Dadurch ergibt sich beispielsweise der Vorteil, dass das zu transportierende Transportgut entweder in die Öffnung, also in den Umfang der Schlaufe eingebracht werden kann oder aber der längenveränderbare Gurt durch die doppelte Anordnung zugfester ist. Auch lässt sich beispielsweise bei den üblichen Transportgurten eine einfachere Verstellung vornehmen, wenn der Gurt als Schlaufe angeordnet ist. Dabei umfasst der Gurt zumindest teilweise ein Stabelement des Gurtankergleiters beziehungsweise des festen Gurthalters.

Weiter kann beispielsweise zur besseren Handhabbarkeit das Gurtbandende als eine Schlaufe ausgeführt sein.

Daneben kann auch der Gurt eine rutschhemmende Oberfläche aufweisen. Ferner kann der Gurt einen Laufstopper aufweisen. Der Laufstopper soll ein Herabfallen der Transportgegenstände verhindern, da der Gurt nur bis zum Laufstopper durch den Gurtankergleiter mit Klemmschloss gezogen werden kann. Ein Durchziehen des Laufstoppers durch den Gurtankergleiter ist nicht möglich. Auf diese Weise verhindert der Laufstopper ein ungewolltes Durchrutschen des Gurtes durch das Klemmschloss. Diese bringt Vorteile in der Sicherheit und Handhabung.

Weiterhin kann der Gurt einen Transportschutz aufweisen. Der Transportschutz dient dem Schutz der Transportgegenstände beim Heranziehen an die Träger-Airlineschiene.

Bei Einsatz eines handelsüblichen Transportgurtes kann die Längenveränderbarkeit auch durch einen Gurtstraffer erreicht werden, wobei der Gurtstraffer dazu dient, dass der Gurtumfang verringert werden kann. Dabei kommen zwei Gurtankergleiter zum Einsatz, welche keine integrierten Klemmschlösser aufweisen. Der Gurtstraffer funktioniert in der Regel in der Weise, dass durch Zug des Gurtbandendes ein vorhandenes Schloss freigegeben wird und beim Loslassen des Gurtbandendes der Gurt im Gurtstraffer automatisch festgelegt wird.

Weiterhin sind auf einer Unterseite des Gurtankergleiters zwei Nuten angeordnet, welche mit zwei randseitig längsflankierenden Gummilippen der Träger-Airlineschiene in Wirkverbindung bringbar sind. Das bedeutet, dass die Gummilippen in die Nuten fast formschlüssig eingreifen und das Verstellen des Gurtankergleiters in der Träger-Airlineschiene nicht beeinträchtigen.

Ausserdem weist der Gurtankergleiter die Träger-Airlineschiene teilweise umfassende Führungsgleiter auf, welche der besseren Führung und Handhabung dienen sollen.

Daneben wird beansprucht, dass ein erfindungsgemässes Anbringen des Systems zur Halterung eines Transportgegenstandes gegeben sein soll. Demnach sind folgende Schritte zu beachten:
- eine Träger-Airlineschiene wird über eine Querholm-Airlineschiene und/oder ein Befestigungsprofil mit dem Querholm verbunden;
- in die Träger-Airlineschiene werden zwei verschiebbare und festlegbare Gurtankergleiter eingesetzt, wobei zwischen den zwei Gurtankergleitern ein Gurt geführt wird;
- die Länge des Gurtes kann über ein Klemmschloss in einem der Gurtankergleiter oder beiden Gurtankergleitern verändert werden.

Ausserdem wird auch die Verwendung eines Systems zur Halterung eines Transportgegenstandes an einer Innenwandung eines Transportfahrzeugs beansprucht, wobei die Innenwandung des Transportfahrzeugs einen Querholm aufweist. Demnach sind folgende Schritte zu beachten:
- die Träger-Airlineschiene wird über eine Querholm-Airlineschiene und/oder ein Befestigungsprofil mit dem Querholm verbunden;
- in die Träger-Airlineschiene werden zwei Gurtankergleiter eingesetzt;
- zwischen den zwei Gurtankergleitern wird ein längenveränderbarer Gurt angeordnet;
- der Transportgegenstand wird in den zu einer Ladefläche des Transportfahrzeuges durchhängenden Gurt eingelegt;
- der Gurt wird durch zumindest einen der beiden mit einem Klemmschloss versehenen Gurtankergleiter verkürzt, sodass der Transportgegenstand gegen zwei randseitig längsflankierenden Gummilippen der Träger-Airlineschiene gedrückt wird.

Vorteilhaft an dem erfindungsgemässen System ist der Umstand, dass das System sich der tatsächlichen Grösse der Ladung anpassen lässt und kein Laderaumverlust entsteht. Weiter ist von Vorteil, dass das System sowohl längs als auch quer im Fahrzeug eingebaut werden kann. Dies ergibt sich aus dem Umstand, dass die Querholm-Airlineschiene bzw. die Befestigungsprofile auch an zwei Querholmen nebeneinander angebracht werden können, um eine Träger-Airlineschiene von dem einen Querholm zu dem anderen zu spannen.

Weitere Vorteile ergeben sich aus dem Umstand, dass keine scharfen Kanten im Laderaum mehr vorhanden sind und die Verletzungsgefahr sich dadurch verringert. Bei Einsatz des längenveränderbaren Gurts ist eine optimale Anpassung an die Ladung gegeben, sodass eine Laderaumverschwendung verhindert wird. Die Position der Ladung ist auf dem System frei wählbar, was durch einfaches Verschieben der Gurtankergleiter erfolgt. Weitere Vorteile des erfindungsgemässen Systems ergeben sich daraus, dass ein Grossteil der eingesetzten Teile Serienprodukte sind und dadurch das System günstig hergestellt werden kann. Ausserdem kann beispielsweise der Gurt mit einem Logo eines Nutzers frei konfiguriert werden. Auch die Farbwahl des Gurtes kann frei bestimmt werden. Durch Einsatz des längenveränderbaren Gurtes wird ein Verkratzen der Ladung optimal verhindert. Das System ermöglicht eine sehr schnelle Montage beziehungsweise Positionierung in der Deckenschiene und ermöglicht eine optimale Last einer Leitung in die Fahrzeugstruktur.

Durch den Einsatz des längenveränderbaren Gurtes wird eine klapperfreie Befestigung des Transportgutes erreicht, wobei bei nichtbeladenem System durch Anspannen des Gurtes ebenfalls ein klapperfreier Zustand möglich ist.

### FIGURENBESCHREIBUNG

Weitere Vorteile, Merkmale und Einzelheiten der Erfindung ergeben sich aus der nachfolgenden Beschreibung des gezeigten Ausführungsbeispiels. Das Ausführungsbeispiel umfasst hierbei folgende Figuren:
Figur 1 zeigt ein System zur Halterung eines Transportgegenstandes gemäss eines Ausführungsbeispiels;
Figur 2 zeigt eine perspektivische Ansicht eines Teils des Systems nach Figur 1 gemäss eines ersten Ausführungsbeispiels;
Figur 3 zeigt eine Draufsicht auf ein Teil des Systems nach Figur 1 gemäss eines zweiten Ausführungsbeispiels;
Figur 4 zeigt eine perspektivische Ansicht eines Gurtankergleiters gemäss der vorliegenden Erfindung mit einem Klemmschloss;
Figur 5 zeigt eine mittige Schnittansicht des Gurtankergleiters nach Figur 4;
Figur 6 zeigt eine Draufsicht auf den Gurtankergleiter nach Figur 4;

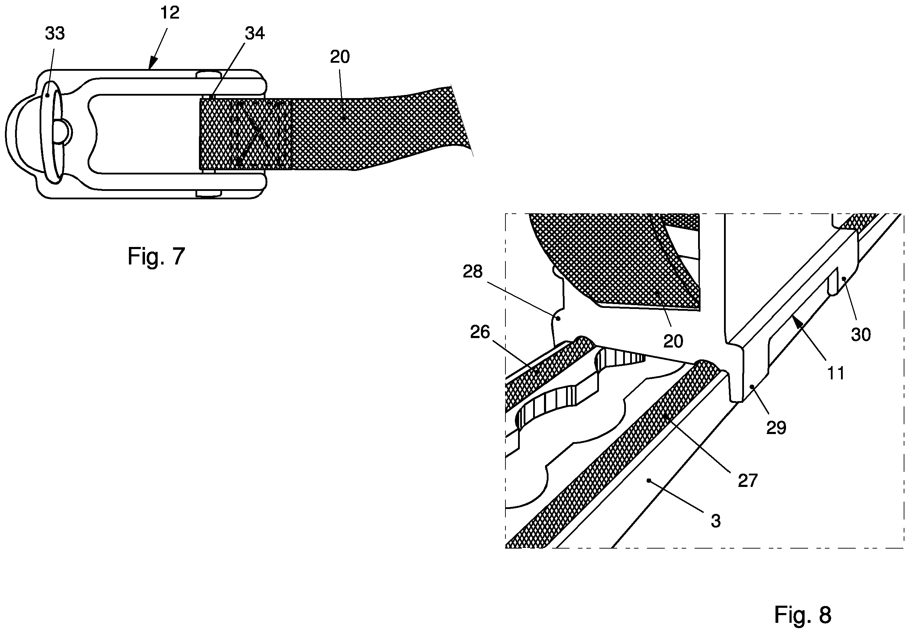

Figur 7 zeigt eine Draufsicht auf einen Gurtankergleiter gemäss der vorliegenden Erfindung ohne Klemmschloss;
Figur 8 zeigt eine perspektivische Ansicht des Gurtankergleiters in Gebrauchslage in einer Träger-Airlineschiene;

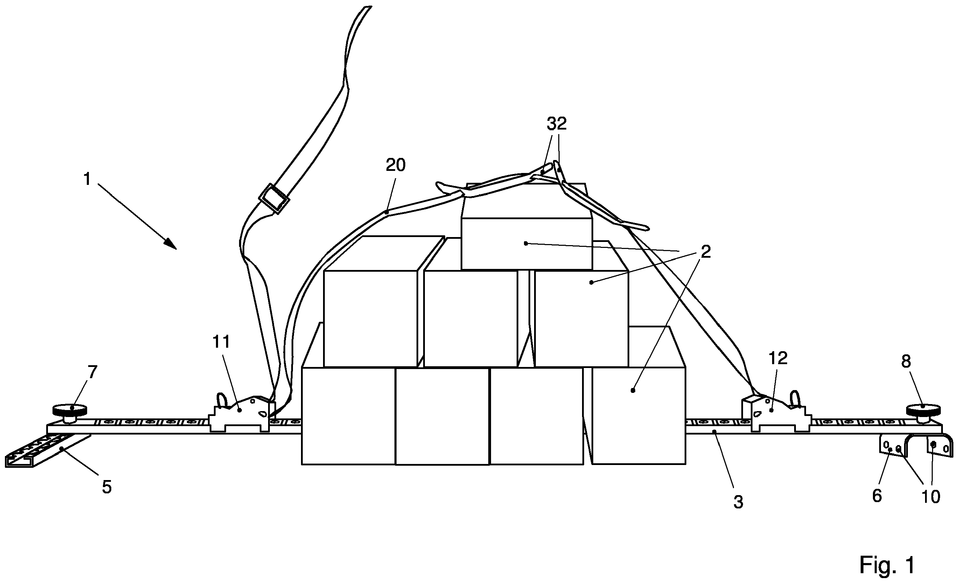

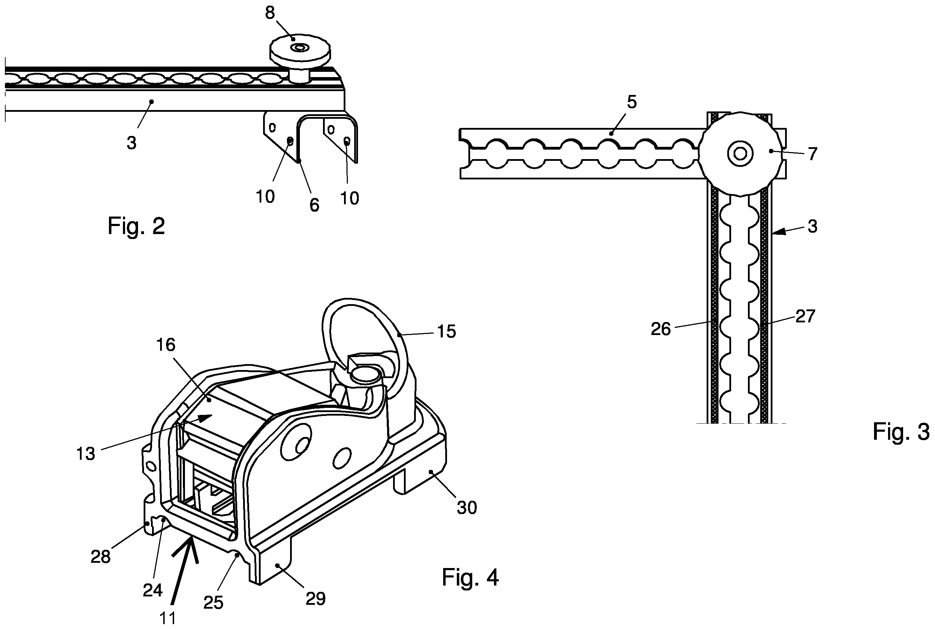

In Figur 1 ist ein System 1 zur Halterung eines Transportgegenstandes 2 gezeigt. Das System 1 weist eine Träger-Airlineschiene 3 auf, welche an einem nicht näher gezeigten Querholm eines nicht näher gezeigten Transportfahrzeuges befestigt werden kann. Die Befestigung erfolgt entweder über eine Querholm-Airlineschiene 5 (siehe Figur 3) und/oder ein Befestigungsprofil 6 (siehe Figur 2). Der Querholm ist üblicherweise quer zu einer Fahrtrichtung des Transportfahrzeuges angeordnet.

Die Querholm-Airlineschiene 5 bzw. das Befestigungsprofil 6 ist über eine Rändelschraube 7 bzw. 8 mit der Träger-Airlineschiene 3 verbunden. Dazu weist die Rändelschraube 7 einen nicht näher gezeigten Sperrfuss auf, welcher in die Querholm-Airlineschiene 5 eingelegt ist und durch die Träger-Airlineschiene 3 hindurchgreift und mittels Handbetätigung wird erreicht, dass die Querholm-Airlineschiene 5 und die Träger-Airlineschiene 3 miteinander verbunden werden. Die Querholm-Airlineschiene 5 wird dabei durch handelsübliche Befestigungsmethoden wie Verschrauben mit dem Querholm verbunden.

Die Rändelschraube 8 wiederum greift durch eine nicht näher gezeigte Öffnung des Befestigungsprofils 6 und die Träger-Airlineschiene 3 hindurch, wobei ein nicht näher gezeigter Schraubenkopf der Rändelschraube 8 nicht durch die Öffnung gleiten kann. Das andere Ende der Rändelschraube 8 wird durch eine Handbetätigung herangeschraubt, so dass der Schraubenkopf das Befestigungsprofil 6 an die Träger-Airlineschiene 3 heranzieht.

Das Befestigungsprofil 6 ist bevorzugt ein U-Profil. Es weist Befestigungslöcher 10 auf, welche zur Festlegung an dem Querholm dienen.

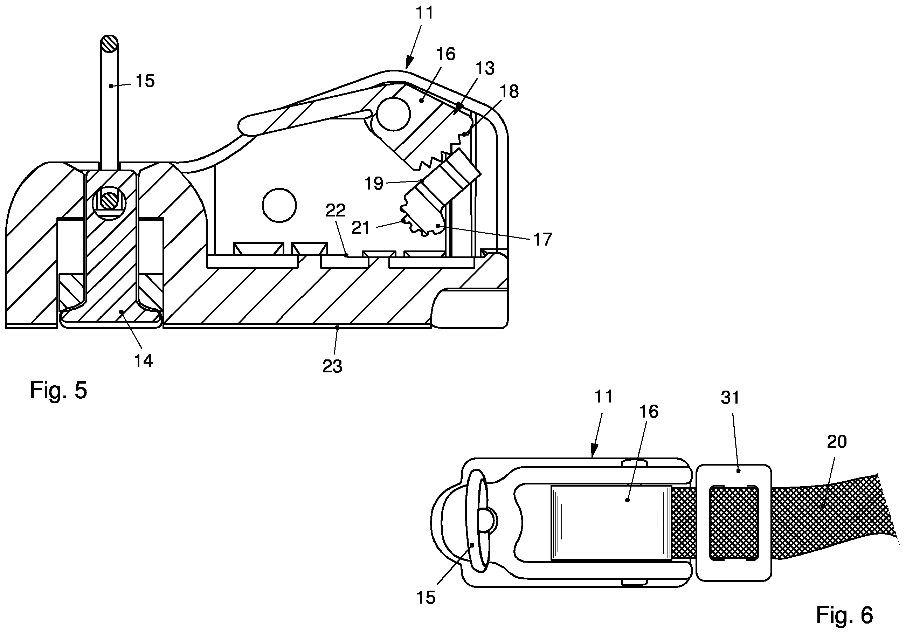

In die Träger-Airlineschiene 3 sind zwei verschiebbare Gurtankergleiter 11 und 12 eingesetzt. Gemäss den Figuren 4 bis 6 weist der Gurtankergleiter 11 ein Klemmschloss 13 auf. Weiter ist ein Airline-Fuss 14 zur Festlegung und Führung des Gurtankergleiters 11 in der Träger-Airlineschiene 3 vorgesehen, wobei der Airline-Fuss 14 mittel eines Zugelements 15 gegen die Kraft einer nicht näher gezeigten Feder bewegt wird.

Das Klemmschloss 13 umfasst einen federgelagerten Betätigungsgriff 16 und ein Gegenelement 17. Der Betätigungsgriff 16 weist eine abgerundete Zackenkante 18 aufweist, welche zu dem Gegenelement 17 hin auf eine Führungsfläche 19 des Gegenelementes 17 gerichtet ist. Durch Niederdrücken des Betätigungsgriffs 16 wird ein zwischen dem Betätigungsgriff 16 und dem Gegenelement 17 verlaufender Gurt 20 (siehe Figur 1) gelöst. Dadurch kann eine Länge des Gurtes 20 zwischen den beiden Gurtankergleitern 11 und 12 verkürzt oder verlängert werden. Bei einer Verkürzung wird der Gurt 20 immer näher zu der Träger-Airlineschiene 3 herangezogen. Bei einer Verlängerung wird der Gurt 20 immer weiter von der Träger-Airlineschiene 3 beabstandet.

An dem Gegenelement 17 ist eine weitere abgerundete Zackenkante 21 vorhanden ist, welche zu einem Innenboden 22 des Gurtankergleiters 11 hin ausgerichtet ist. Innenboden 22 bedeutet bei normalem Gebrauch, dass der Teil des Gurtankergleiters 11 gemeint ist, welcher einer Unterseite 23 des Gurtankergleiters 11 abgewendet ist, wobei die Unterseite 23 auf der Träger-Airlineschiene 3 aufliegt.

Auf der Unterseite 23 des Gurtankergleiters 11 sind zwei Nuten 24 und 25 angeordnet, welche mit zwei randseitig längsflankierenden Gummilippen 26 und 27 der Träger-Airlineschiene 3 in Wirkverbindung gebracht werden.

Der Gurtankergleiter 11 umfasst weiterhin zwei die Träger-Airlineschiene 3 teilweise umfassende Führungsgleiter 28 bis 30.

Der Gurt 20 weist einen Laufstopper 31 auf, welcher verhindert, dass der Transportgegenstand 2 unkontrolliert auf eine Ladefläche des Transportfahrzeuges fallen kann, falls das Klemmschloss 13 des Gurtankergleiters 11 versagen sollte.

Der Gurt 20 kann weiterhin mit einem Transportschutz 32 versehen sein. Es handelt sich dabei bevorzugt um einen Leder- oder Kunststoffflicken, durch welchen der Gurt 20 hindurchgeführt ist.

Der Gurtankergleiter 12 weist ebenfalls einen nicht näher gezeigten Airline-Fuss zur Festlegung und Führung des Gurtankergleiters 12 in der Träger-Airlineschiene 3 auf, wobei der Airline-Fuss mittel eines Zugelements 33 gegen die Kraft einer nicht näher gezeigten Feder bewegt wird.

Weiterhin weist der Gurtankergleiter 12 ein Stabelement 34 auf, um welches ein Ende des Gurtes 20 gelegt und bevorzugt vernäht ist. Dadurch bildet es ausreichenden Gegendruck, wenn der Gurt 20 mit Hilfe des Klemmschlosses 13 angezogen und verkürzt wird.

**Bezugszeichenliste**

| | | | | | |
|---|---|---|---|---|---|
| 1 | System | 34 | Stabelement | | |
| 2 | Transportgegenstand | 35 | | | |
| 3 | Träger-Airlineschiene | 36 | | | |
| 4 | | 37 | | | |
| 5 | Querholm-Airlineschiene | 38 | | | |
| 6 | Befestigungsprofil | 39 | | | |
| 7 | Rändelschraube | 40 | | | |
| 8 | Rändelschraube | 41 | | | |
| 9 | | 42 | | | |
| 10 | Befestigungslöcher | 43 | | | |
| 11 | Gurtankergleiter | 44 | | | |
| 12 | Gurtankergleiter | 45 | | | |
| 13 | Klemmschloss | 46 | | | |
| 14 | Airline-Fuss | 47 | | | |
| 15 | Zugelement | 48 | | | |
| 16 | Betätigungsgriff | 49 | | | |
| 17 | Gegenelement | 50 | | | |
| 18 | Zacken kante | 51 | | | |
| 19 | Führungsfläche | 52 | | | |
| 20 | Gurt | 53 | | | |
| 21 | Zackenkante | 54 | | | |
| 22 | Innenboden | 55 | | | |
| 23 | Unterseite | 56 | | | |
| 24 | Nut | 57 | | | |
| 25 | Nut | 58 | | | |
| 26 | Gummilippe | 59 | | | |
| 27 | Gummilippe | 60 | | | |
| 28 | Führungsgleiter | 61 | | | |
| 29 | Führungsgleiter | 62 | | | |
| 30 | Führungsgleiter | 63 | | | |
| 31 | Laufstopper | 64 | | | |
| 32 | Transportschutz | 65 | | | |
| 33 | Zugelement | 66 | | | |

## Patentansprüche

1. System zur Halterung eines Transportgegenstandes (2) an einer Innenwandung eines Transportfahrzeugs, wobei die Innenwandung des Transportfahrzeugs einen Querholm aufweist,
**dadurch gekennzeichnet,**
**dass** an den Querholm eine Querholm-Airlineschiene (5) und/oder ein Befestigungsprofil (6) reversibel anbringbar ist, wobei die Querholm-Airlineschiene (5) und/oder das Befestigungsprofil (6) mit einer Träger-Airlineschiene (3) verbindbar ist/sind, wobei die Träger-Airlineschiene (3) zwei in der Träger-Airlineschiene (3) verschiebbare und festlegbare Gurtankergleiter (11, 12) umfasst, wobei zwischen den zwei Gurtankergleitern (11, 12) ein längenveränderbarer Gurt (20) angeordnet ist, wobei einer der beiden Gurtankergleiter (11, 12) oder beide Gurtankergleiter (11, 12) ein Klemmschloss (13) umfasst/umfassen.

2. System nach Anspruch 1, **dadurch gekennzeichnet, dass** der Gurt (20) einen Laufstopper (31) aufweist.

3. System nach Anspruch 1 oder 2, **dadurch gekennzeichnet, dass** der Gurt (20) einen Gurtstraffer umfasst.

4. System nach einem der vorigen Ansprüche, **dadurch gekennzeichnet, dass** der Gurt (20) einen Transportschutz (32) aufweist.

5. System nach einem der vorigen Ansprüche, **dadurch gekennzeichnet, dass** die Träger-Airlineschiene (3) zwei die mittig angeordneten Airline-Ausnehmungen randseitig längsflankierenden Gummilippen (26, 27) aufweist.

6. System nach einem der Ansprüche 1 bis 5, **dadurch gekennzeichnet, dass** der Querholm mit einem zweiten Querholm mittels der Querholm-Airlineschiene (5) verbindbar ist.

7. System nach einem der vorigen Ansprüche, **dadurch gekennzeichnet, dass** zumindest einer der Gurtankergleiter (11, 12) einen Airline-Fuss (14) umfasst, wobei der Airline-Fuss (14) mittel eines Zugelements (15) gegen die Kraft einer Feder bewegbar ist und wobei zumindest einer der Gurtankergleiter ein Klemmschloss (13) umfasst.

8. System nach Anspruch 7, **dadurch gekennzeichnet, dass** das Klemmschloss (13) einen federgelagerten Betätigungsgriff (16) und ein Gegenelement (17) umfasst.

9. System nach Anspruch 7 oder 8, **dadurch gekennzeichnet, dass** der Betätigungsgriff (16) eine abgerundete Zackenkante (18) aufweist, welche zu dem Gegenelement (17) hin auf eine Führungsfläche (19) des Gegenelementes (17) gerichtet ist, wobei durch Niederdrücken des Betätigungsgriffs (16) ein zwischen dem Betätigungsgriff (16) und dem Gegenelement (17) verlaufender Gurt (20) lösbar ist.

10. System nach einem der Ansprüche 7 bis 9, **dadurch gekennzeichnet, dass** eine weitere abgerundete Zackenkante (21) an dem Gegenelement (17) vorhanden ist, welche zu einem Innenboden (22) des Gurtankergleiters (11) ausgerichtet ist.

11. System nach einem der Ansprüche 7 bis 10, **dadurch gekennzeichnet, dass** auf einer Unterseite (23) des Gurtankergleiters (11, 12) zwei Nuten (24, 25) angeordnet sind, welche mit zwei randseitig längsflankierenden Gummilippen (26, 27) der Träger-Airlineschiene (3) in Wirkverbindung bringbar sind.

12. System nach einem der Ansprüche 7 bis 11, **dadurch gekennzeichnet, dass** die Träger-Airlineschiene (3) teilweise umfassende Führungsgleiter (28, 29, 30) vorhanden sind.

13. Verfahren zum Anbringen eines Systems (1) zur Halterung eines Transportgegenstandes (2) an einer Innenwandung eines Transportfahrzeugs, wobei die Innenwandung des Transportfahrzeugs einen Querholm aufweist, **gekennzeichnet durch** die folgenden Schritte:
- eine Träger-Airlineschiene (3) wird über eine Querholm-Airlineschiene (5) und/oder ein Befestigungsprofil (6) mit dem Querholm verbunden;
- in die Träger-Airlineschiene (3) werden zwei verschiebbare und festlegbare Gurtankergleiter (11, 12) eingesetzt, wobei zwischen den zwei Gurtankergleitern (11, 12) ein Gurt (20) geführt wird;
- die Länge des Gurtes (20) kann über ein Klemmschloss (13) in einem der Gurtankergleiter (11, 12) oder beiden Gurtankergleitern (11, 12) verändert werden.

14. Verwendung eines Systems (1) zur Halterung eines Transportgegenstandes (2) an einer Innenwandung eines Transportfahrzeugs, wobei die Innenwandung des Transportfahrzeugs einen Querholm aufweist, **gekennzeichnet durch** folgende Schritte:
- die Träger-Airlineschiene (3) wird über eine Querholm-Airlineschiene (5) und/oder ein Befestigungsprofil (6) mit dem Querholm verbunden;
- in die Träger-Airlineschiene (3) werden zwei Gurtankergleiter (11, 12) eingesetzt;
- zwischen den zwei Gurtankergleitern (11, 12) wird ein längenveränderbarer Gurt (20) angeordnet;
- der Transportgegenstand (2) wird in den zu einer Ladefläche des Transportfahrzeuges durchhängenden Gurt (20) eingelegt;
- der Gurt (20) wird durch zumindest einen der beiden mit einem Klemmschloss (13) versehenen Gurtankergleiter (11, 12) verkürzt, sodass der Transportgegenstand (2) gegen zwei randseitig längsflankierenden Gummilippen (26, 27) der Träger-Airlineschiene (3) gedrückt wird.

## Claims

1. System for holding a transport object (2) at an inner wall of a transport vehicle, wherein the inner wall of the transport vehicle has a cross beam,
**characterized in**
**that** a cross beam airline rail (5) and/or a fastening profile (6) is reversibly attachable to the cross beam, wherein the cross beam airline rail (5) and/or the fastening profile (6) is/are connectable with a carrier airline rail (3), wherein the carrier airline rail (3) comprises two belt anchor gliders (11, 12) which can be displaced and fixed in the carrier airline rail (3), wherein between the two belt anchor gliders (11, 12) a length adjustable belt (20) is arranged, wherein one of the two belt anchor gliders (11, 12) or both belt anchor gliders (11, 12) has/have a clamping lock (13).

2. System according to claim 1, **characterized in that** the belt (20) comprises a barrel stopper (31).

3. System according to claim 1 or 2, **characterised in that** the belt (20) comprises a belt tensioner.

4. System according to one of the preceding claims, **characterized in that** the belt (20) has a transport protection (32).

5. System according to one of the previous claims, **characterized in that** the carrier airline rail (3) has two rubber lips (26, 27) which longitudinally flank the centrally arranged airline recesses at the edge.

6. System according to one of claims 1 to 5, **characterised in that** the cross beam can be connected to a second cross beam by means of the cross beam airline rail (5).

7. System according to one of the previous claims, **characterized in that** at least one of the belt anchor slides (11, 12) comprises an airline foot (14), wherein the airline foot (14) is movable against the force of a spring by means of a pulling element (15) and wherein at least one of the belt anchor slides comprises a clamping lock (13).

8. System according to claim 7, **characterized in that** the clamping lock (13) has a spring-mounted actuating handle (16) and a counter element (17).

9. System according to claim 7 or 8, **characterized in that** the actuating handle (16) has a rounded serrated edge (18), which is directed towards a guide surface (19) of the counter element (17), wherein, by depressing the actuating handle (16), the belt (20) between the actuating handle (16) and the counter element (17) can be released.

10. System according to any of claims 7 to 9, **characterised in that** a further rounded serrated edge (21) is provided on the counter element (17) which is aligned to an inner bottom (22) of the belt anchor glider (11).

11. System according to any of claims 7 to 10, **characterized in that** two grooves (24, 25) are arranged on an underside (23) of the belt anchor glider (11, 12) which are engageable with two rubber lips (26, 27) of the carrier airline rail (3) flanking longitudinally at the edges.

12. System according to one of claims 7 to 11, **characterised in that** guide gliders (28, 29, 30) partially enclosing the carrier airline rail (3) are provided.

13. Method for attaching a system (1) for holding a transport object (2) at an inner wall of a transport vehicle, wherein the inner wall of the transport vehicle comprises an cross beam, **characterized by** the following steps:
- a carrier airline rail (3) is connected to the cross beam via a cross beam airline rail (5) and/or a fastening profile (6);
- into the carrier airline rail (3), two displaceable and fixable belt anchor gliders (11, 12) are inserted, wherein a belt (20) is guided between the two belt anchor gliders (11, 12);
- the length of the belt (20) can be adjusted by means of a clamping lock (13) in one of the belt anchor gliders (11, 12) or both belt anchor gliders (11, 12).

14. Use of a system (1) for holding a transport object (2) on an inner wall of a transport vehicle, the inner wall of the transport vehicle having a cross beam, **characterized by** the following steps:
- the carrier airline rail (3) is connected to the cross beam via a cross beam airline rail (5) and/or a fastening profile (6);
- two belt anchor gliders (11, 12) are inserted into the carrier airline rail (3);
- a length adjustable belt (20) is arranged between the two belt anchor gliders (11, 12);
- the transport object (2) is placed in the belt (20) hanging through to a loading area of the transport vehicle;
- the belt (20) is shortened by at least one of the two belt anchor gliders (11, 12) provided with a clamping lock (13), so that the transport object (2) is pressed against two rubber lips (26, 27) of the carrier airline rail (3), which rubber lips flank the edges longitudinally.

## Revendications

1. Système de maintien d'un objet de transport (2) sur une paroi intérieure d'un véhicule de transport, dans lequel la paroi intérieure du véhicule de transport présente une poutre transversale,
**caractérisé par le fait**
**qu'**un rail de transport aérien de poutre transversale (5) et/ou un profilé de fixation (6) peuvent être installés de manière réversible sur la poutre transversale, où le rail de transport aérien de poutre transversale (5) et/ou le profilé de fixation (6) peut/peuvent être connectés à un rail de transport aérien de support (3), où le rail de transport aérien de support (3) comporte deux patins d'ancrage de courroie (11, 12) déplaçables et pouvant être fixés dans le rail de transport aérien de support (3), où entre les deux patins d'ancrage de courroie (11, 12) est disposée une courroie (20) de longueur ajustable, où l'un des deux patins d'ancrage de courroie (11, 12) ou les deux patins d'ancrage de courroie (11, 12) comporte/comportent une boucle de serrage (13).

2. Système selon la revendication 1, **caractérisé par le fait que** la courroie (20) présente un arrêtoir de course (31).

3. Système selon la revendication 1 ou 2, **caractérisé par le fait que** la courroie (20) comporte un tendeur de courroie.

4. Système selon l'une quelconque des revendications précédentes, **caractérisé par le fait que** la courroie (20) présente une protection de transport (32).

5. Système selon l'une quelconque des revendications précédentes, **caractérisé par le fait que** le rail de transport aérien de support (3) présente deux lèvres en caoutchouc (26, 27) flanquant longitudinalement du côté des bords les évidements de rail de transport aérien disposés au centre.

6. Système selon l'une des revendications 1 à 5, **caractérisé par le fait que** la poutre transversale peut être connectée à une deuxième poutre transversale au moyen du rail de transport aérien de poutre transversale (5).

7. Système selon l'une quelconque des revendications précédentes, **caractérisé par le fait qu'**au moins l'un des patins d'ancrage de courroie (11, 12) comporte un pied de transporteur aérien (14), dans lequel le pied de transporteur aérien (14) est déplaçable au moyen d'un élément de traction (15) à l'encontre de la force d'un ressort et dans lequel au moins l'un des patins d'ancrage de courroie comporte une boucle de serrage (13).

8. Système selon la revendication 7, **caractérisé par le fait que** la boucle de serrage (13) comporte une poignée d'actionnement montée sur ressort (16) et un élément antagoniste (17).

9. Système selon la revendication 7 ou 8, **caractérisé par le fait que** la poignée d'actionnement (16) présente un bord denté arrondi (18) qui est orienté vers l'élément antagoniste (17) en direction d'une surface de guidage (19) de l'élément antagoniste (17), dans lequel une courroie (20) se déplaçant entre la poignée d'actionnement (16) et l'élément antagoniste (17) peut être dégagée en poussant la poignée d'actionnement (16) vers le bas.

10. Système selon l'une des revendications 7 à 9, **caractérisé par le fait que** sur l'élément antagoniste (17) est présent un autre bord denté arrondi (21) qui est orienté vers un fond intérieur (22) du patin d'ancrage de courroie (11).

11. Système selon l'une des revendications 7 à 10, **caractérisé par le fait que** sur une face inférieure (23) du patin d'ancrage de courroie (11, 12) sont disposées deux rainures (24, 25) qui peuvent être amenées en liaison active avec deux lèvres en caoutchouc (26, 27) flanquant longitudinalement du côté du bord du rail de transport aérien de support (3).

12. Système selon l'une quelconque des revendications 7 à 11, **caractérisé par le fait que** le rail de transport aérien de support (3) comporte des patins de guidage (28, 29, 30) l'entourant partiellement.

13. Procédé d'installation d'un système (1) de maintien d'un objet de transport (2) sur une paroi intérieure d'un véhicule de transport, dans lequel la paroi intérieure du véhicule de transport présente une poutre transversale, **caractérisé par** les étapes suivantes:
- un rail de transport aérien (3) est connecté par l'intermédiaire d'un rail de transport aérien de poutre transversale (5) et/ou d'un profilé de fixation (6) à la poutre transversale;
- dans le rail de transport aérien (3) sont placés deux patins d'ancrage de courroie déplaçables et pouvant être fixés (11, 12), où entre les deux patins d'ancrage de courroie (11, 12) est guidée une courroie (20);
- la longueur de la courroie (20) peut être modifiée par l'intermédiaire d'une boucle de serrage (13) dans l'un des patins d'ancrage de courroie (11, 12) ou dans les deux patins d'ancrage de courroie (11, 12).

14. Utilisation d'un système (1) de maintien d'un objet de transport (2) sur une paroi intérieure d'un véhicule de transport, où la paroi intérieure du véhicule de transport présente une poutre transversale, **caractérisée par** les étapes suivantes:
- le rail de transport aérien (3) est connecté par l'intermédiaire d'un rail de transport aérien de poutre transversale (5) et/ou d'un profilé de fixation (6) à la poutre transversale;
- dans le rail de transport aérien (3) sont placés deux patins d'ancrage de courroie (11, 12);
- entre les deux patins d'ancrage de courroie (11, 12) est disposée une courroie de longueur variable (20);
- l'objet de transport (2) est placé dans une courroie (20) affaissée par rapport à une surface de chargement du véhicule de transport;
- la courroie (20) est raccourcie par au moins l'un des deux patins d'ancrage de courroie (11, 12) munis d'une boucle de serrage (13), de sorte que l'objet de transport (2) soit poussée contre deux lèvres en caoutchouc (26, 27) flanquant longitudinalement du côté du bord du rail de transport aérien de support (3).
